Europäisches Patentamt

European Patent Office

Office européen des brevets

(11) Publication number: **0 333 271**
**A1**

# EUROPEAN PATENT APPLICATION

(21) Application number: **89200615.6**

(22) Date of filing: **10.03.89**

(51) Int. Cl.⁴: **G11B 23/023 , G11B 33/04**

(30) Priority: **18.03.88 NL 8800993**

(43) Date of publication of application:
**20.09.89 Bulletin 89/38**

(84) Designated Contracting States:
**AT BE CH DE ES FR GB GR IT LI LU NL SE**

(71) Applicant: **Groenendijk, Johannes Willibrordus Anthonius**
**Voorofscheweg 390**
**NL-2771 MS Boskoop(NL)**

(72) Inventor: **Groenendijk, Johannes Willibrordus Anthonius**
**Voorofscheweg 390**
**NL-2771 MS Boskoop(NL)**

(74) Representative: **Kooy, Leendert Willem et al**
**OCTROOIBUREAU VRIESENDORP & GAADE**
**P.O. Box 266**
**NL-2501 AW The Hague(NL)**

(54) **Storage system for cassettes and elements adapted to be used therefore.**

㊗ System which can be modified as desired, its pertaining basic elements (1), oblique elements (3), lids (2), doubling elements and coupling elements (4) offering the possibility to store music, compact disc, video cassettes and the like, in a horizontal, vertical or oblique position.

FIG. 1

## Storage system for cassettes comprising elements suitable for that purpose

The present invention relates to a storage system for cassettes and the like, usually containing audio recording elements and/or video recording elements.

Such cassettes are usually referred to as "music cassettes", "audio cassettes", "compact disc cassettes" or "video cassettes" and hereafter they will be referred to simply as "cassettes".

Cassettes of this type usually consist of plastic boxes in the shape of a flat, rectangular parellelepiped.

The boxes are usually of standard dimensions and comprise recording tape for video and/or audio, or a disc with digitally applied video recording elements and/or audio recording elements.

The invention aims to provide a solution towards cassette storage by means of elements suitable for that purpose, whose constructive properties have been designed so, that a number of elements form a storage cabinet that can easily be extended and adapted to any location and in which the storage of the cassettes can optionally take place in a vertical, horizontal or oblique position.

There is a varied supply of an extensive number of types of storage systems for cassettes on the market, which allow the storage of cassettes in various ways.

The present storage systems or storage cabinets allow cassettes to be positioned in horizontal, vertical or oblique positions, and sometimes there is the possibility to do so in two of the above-stated positions.

Moreover, the above-stated storage systems or storage cabinets sometimes allow for variation, so as to be extended and adapted to any location.

However, the present storage possibilities do not allow for all these requirements to be met in bot position and adaptation to any location.

The present storage system allows cassettes to be optionally positioned in horizontal, vertical or oblique position and offer the possibility to extend and adapt it per cassette to any location.

The present storage system also offers the possibility to realize the transfer from oblique positioning of the cassettes to horizontal positioning of the cassettes by means of the oblique element.

The storage system thus comprises a number of different elements, which can be coupled to one another by means of a clamping coupling, and in which the position of the elements with respect to one another is determined by joining projections and recesses.

Each element for storing a cassette comprises a plane of rectangular format with dimensions in accordance with the requirements of each type of cassette.

A variable number of elements can be coupled to one another so that a block of elements is formed, which block can be closed by a lid.

The invention will be further elucidated on the basis of the drawing, in which:

Fig. 1 shows a three-dimensional portion of a number of units for forming the storage cabinets, a lid being incorporated at the upper side, and the bottom element being represented in a reversed manner, having the insertion opening for cassettes at the rear.

Fig. 2 shows a top view of one of the basic elements shown in fig. 1.

Fig. 3 shows a cross-section along the line III-III in fig. 2.

Fig. 4 shows a bottom view of one of the basic elements shown in fig. 1.

Fig. 5 shows a side view of one side of a basic element or a doubling element.

Fig. 6 shows a bottom view of the lid shown in fig. 1.

Fig. 7 shows a top view of the oblique element.

Fig. 8 shows a bottom view of the oblique element.

Fig. 9 is a three-dimensional picture of the coupling element.

Fig. 10 is a side view of a composition of elements for oblique positioning of the cassettes.

Fig. 11 is a side view of a composition of elements for oblique positioning of cassettes with which also the transition from oblique to horizontal positioning of cassettes is indicated, and in which one cassette is shown and indicated by reference numeral 5.

In the figures, the same reference numerals all refer to the same parts.

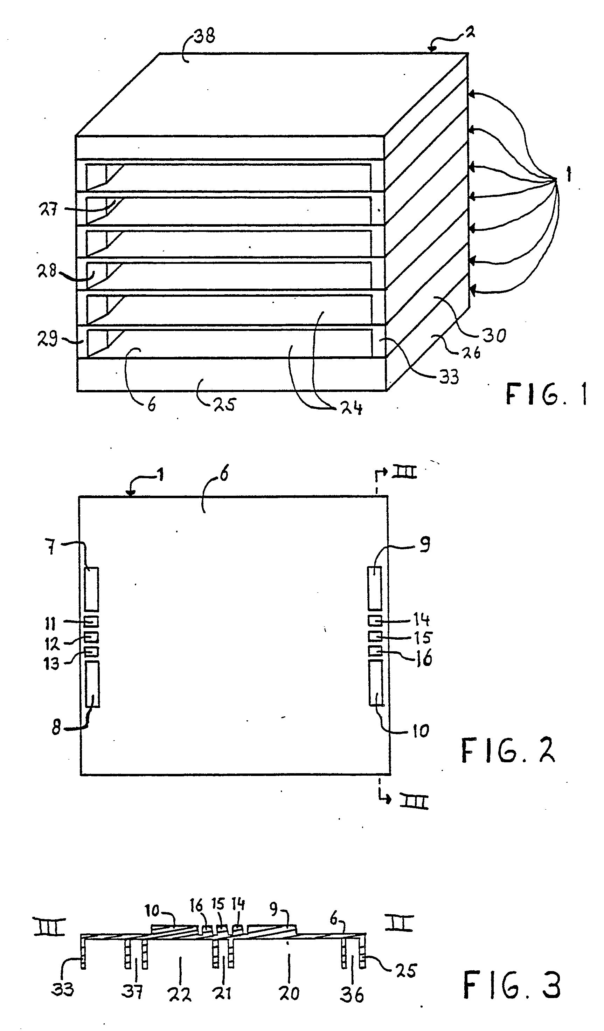

In fig. 1 a number of joined basic elements 1 are shown which are suitable for storing cassettes, ano also the possibility to rotate the bottom basic elements over half a turn with the opening at the rear so as to function as a bottom plate.

The basic elements 1 are formed from a rectangle, the top plane 6 serving as support plane for a cassette to be stored and a joining basic element 1.

Walls have been placed perpendicular to the bottom plane 23 of basic element 1, which walls are shown in fig. 4, which is a bottom view of basic element 1.

The top view of basic element 1 is shown in fig. 2 and comprises a plane 6 with perpendicularly upwardly directed rectangular projections 7, 8, 9, 10, 11, 12, 13, 14, 15 and 16 which correspond, as they are coupled to another basic element 1, due to a clamping fit, to the recesses 17, 18, 19, 20, 21 and 22 shown in fig. 4, which is a bottom view of basic element 1.

The bottom view of basic element 1 comprises of plane 23 with walls 25, 26, 27, 28, d29, 30, 31, 32 and 33 placed perpendicularly thereto, as well as partitions which form recesses into which the projections fit that are shown in fig. 2.

When coupling the basic elements 1 perpendicularly parallel, with which opening 24 is situated on the same side, projection 15 fits into recess 21 and projection 12 into recess 18.

Thus the adjacent projections fit into the corresponding, adjacent recesses.

Fig. 3 is a cross-section along the line III-III in fig. 2 and represents the relation between the projections and the recesses, fig. 5 being a side view of wall 30 and the projections situated on this side.

If the element 23 would be omitted from fig. 4, so-called doubling elements would be obtained that have the same side view as shown in fig. 5. With these elements, in fig. 1 an opening 24 can easily be made which is e.g. twice the size of the openings shown in that figure.

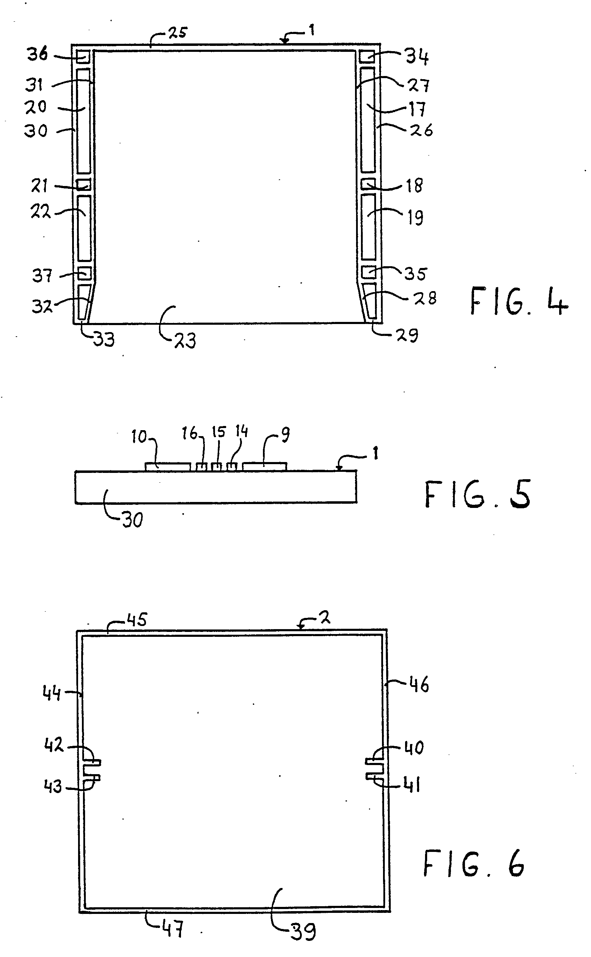

Basic element 1 can be coupled to lid 2, whose top side 38 has a flat surface and of which the bottom side, as shown in fig. 6, comprises a plane 39 with walls 44, 45, 46 and 47 placed perpendicularly thereto.

Moreover, partitions have been placed perpendicularly onto plane 39, the partitions 42 and 43 forming a straight angle with wall 44 and the partitions 40 and 41 forming a straight angle with wall 46.

The lid 2 can be placed onto the projections 12 and 15 or 11 and 14 or 13 and 16.

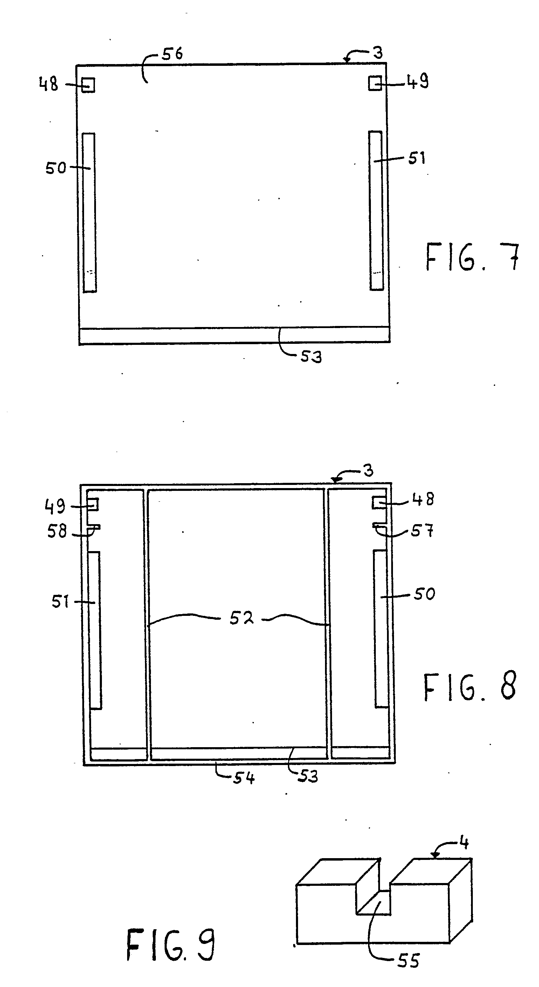

With the aid of an oblique element 3, as shown in figures 7 and 8, it is possible to place the basic elements 1 in an oblique position.

For that purpose the coupling elements 4 have to be fitted into the recesses 34, 35, 36 and 17 of basic element 1, after which basic element 1 is placed onto oblique element 3, the parts of the coupling elements 4 that protrude from the recesses clamping in opening 48, 50, 49 and 51, respectively.

Each next coupling of basic element 1 is effected by coupling recess 18 to projection 13 and recess 21 to projection 16.

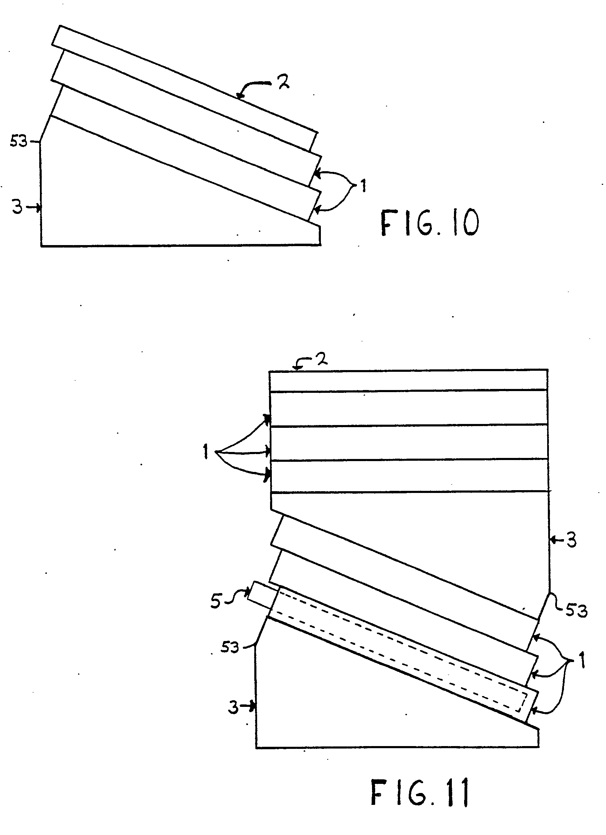

Figure 10 shows a side view of the positioning in the oblique position of basic element 1, in which lid 2 has also been arranged, whose partitions 42 and 43 clamp projection 13 between them and whose partitions 40 and 41 clamp projections 16 between them.

Reference numeral 53 indicates the bending point of wall 54.

It is possible to place the top plane 56 of oblique element 3 on top of top plane 6 of an obliquely positioned basic element 1, the projections on top plane 6 being received in the openings 50 and 51 of top plane 56 and the oblique element 3 obtaining a position as shown in fig. 11.

Subsequently, a basic element 1 with protruding coupling elements 4 can now be placed into the recesses 34, 35, 36 and 37 on the oblique element 3, the protruding portions of the coupling elements 4 being clamped between the wall 54 and the partitions 57 and 58.

This allows for a cassette to be placed into the latter basic element 1, the cassette being held in the horizontal position by the walls 52.

Basic element 1 and/or oblique elements 3 can be laterally coupled by means of coupling element 4, which can be placed with recess 55 onto the bottom side of the side walls of the bottom elements.

Adjacent uncouplable side walls can be brought to an equal level by means of coupling element 4, so that the storage cabinet can be kept in perfect alignment.

Coupling element 4 can thus serve both as a coupling element and as a base.

Fig. 11 shows a cassette, indicated by reference numeral 5, said casette being represented as free from the walls of basic element 1 and oblique element 3.

The cassettes can be manually removed, for which purpose the sides of the cassette, protruding from basic element 1, have to be taken hold of.

For insertion of cassettes the walls 32 and 28 have been positioned so, that insertion is facilitated.

Moreover, it is remarked that a stack of an indefinite number of basic elements that have been stacked horizontally, can be tilted onto one of its two sides, a cassette then being carried by wall 27 or 31, so that the cassette can also take up a vertical position.

The dimensions of the various elements are mainly determined by the dimensions of the generally standardized cassettes, and they give the entire composition an estethic and homogenous appearance.

The elements can be made of a synthetic material, e.g. by means of injection moulding.

The invention is in no way restricted to the above-described embodiment and within the framework of the present patent application various alterations can be considered, e.g. with respect to shape, dimensions, compository parts and the appearance of the above-described elements.

## Claims

Storage systems for cassettes and the like, **characterized by** an indefinite number of basic elements (1), oblique elements (3), lids (2), doubling elements and connecting elements (4), in which two or more joined basic elements form a storage cabinet for one or more cassettes (5), with which it is possible to place the storage cabinet either in a horizontal or vertical position, and in which one basic element or a composition of basic elements can be combined with the oblique element by coupling elements (4) so that one or more cassettes can be placed into a storage cabinet for oblique storage of cassettes and in which a lid can be placed on top of a basic element.

2. Storage system according to claim 1, **characterized in that** the basic element (1) is formed by a rectangular top plane (6) with projections (7-16), a wall (25) being situated perpendicularly to the bottom side of the top plane and a double wall (26, 27 28 and 30, 31/32) with partitions being situated on the sides, the two sides or said double wall slightly converging at the front, and said front having an opening (24) that provides sufficient space for the easy insertion of a cassette (5) that, after having been positioned in the basic element, is enclosed by the top (6), sides and rear wall of said basic element, said cassette protruding sufficiently from the front of the basic element to be taken out by hand, and the bottom of the cassette resting on the top plane of a subsequent basis element, or on either the top or bottom plane of an oblique element that is coupled to the bottom side of said first basic element.

3. Storage system according to claim 1 or 2, **characterized in that** two successive basic elements are clampingly coupled by fitting projections (7-16) on top of a basic element into recesses (17-22) at the bottom ot a successive basic element, the projections on top being disposed so, that two successive basic elements can either be coupled perpendicular and parallel to one another with their fronts in one plane (twisted a half turn with respect to one another, the front side of the one element being in one plane with the rear side of the other element), or in a shifted position, the elements protruding somewhat with respect to one another.

4. Storage system according to one of the preceding claims, **characterized in that** the basic element has recesses (34-37) at its bottom side, which allow coupling elements to be positioned therein, said coupling elements partly protruding from the recesses.

5. Storage system according to one of the preceding claims, **characterized in that** a basic element (1) provided with one of the coupling elements (4) can be coupled at the top of the oblique element, which has openings (48-51) into which the coupling elements fit, so that a cassette can be placed in the oblique position between the oblique element and the coupled basic element.

6. Storage system according to one of the preceding claims, **characterized in that** the projections (7-16) at the top of the basic element are positioned so, that they can be coupled to the top of the oblique element, which has openings (50, 51) for that purpose in which the projections in question fit clampingly.

7. Storage system according to one of the preceding claims, **characterized in that** the oblique element (3) at its bottom side has recesses (48-51), walls (54), intermediate walls (52) and partitions (57, 58), which allow the coupling with the bottom of a basic element comprising protruding coupling elements (4), which for that purpose fit clampingly between the partitions and the opposite wall portions at the front of the oblique element.

8. Storage system according to one of the preceding claims, **characterized in that** the top of a basic element can be sealed by a lid (2), said lid comprising for that purpose partitions at its bottom side, which fit clampingly over the central or the immediately adjacent projections that are disposed on the two sides of the top of the basic element.

9. Storage system according to one of the preceding claims, **characterized in that** two doubling elements offer the possibility of enlarging the entrance (24).

10. Storage system for cassettes having elements fit for that purpose as described here-above and/or shown in the enclosed drawings.

FIG. 1

FIG. 2

FIG. 3

FIG. 4

FIG. 5

FIG. 6

FIG. 7

FIG. 8

FIG. 9

FIG. 10

FIG. 11

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-3 635 350  (B.E. WOLF) <br> * Abstract; column 1, line 53 - column 2, line 52; figures * | 1-4,8, 10 | G 11 B   23/023 <br> G 11 B   33/04 |
| A | DE-A-2 654 861  (P. FÜWESI) <br> * Claims; figures * | 1,4,10 | |
| A | GB-A-1 459 451  (HANCOCK et al.) <br> * Page 2, line 64 - page 3, line 54; claims; figures * | 1-3,8, 10 | |
| A | DE-U-8 600 408  (E. BAUR) <br> * Claims; figures * | 1-3 | |
| A | FR-A-2 506 492  (BASF) | | |
| A | DE-A-2 343 487  (I.D.N. INVENTIONS) | | |
| A | FR-A-1 362 872  (F. STÜBBE) | | |

**TECHNICAL FIELDS SEARCHED (Int. Cl.4)**

G 11 B
B 65 D

The present search report has been drawn up for all claims

| Place of search | Date of completion of the search | Examiner |
|---|---|---|
| THE HAGUE | 13-06-1989 | DECLAT M.G. |